# EUROPÄISCHE PATENTSCHRIFT

(11) **EP 2 317 621 B1**
(45) Veröffentlichungstag und Bekanntmachung des Hinweises auf die Patenterteilung: **10.09.2014**
(21) Anmeldenummer: 10013009.5
(22) Anmeldetag: 01.10.2010
(51) Int. Cl.: H02G 3/12

(54) **UP-Installationsschalter mit Tragring**
UP installation switch with bearing ring
Commutateur d'installation UP doté d'un anneau de portage

(30) Priorität: 29.10.2009 DE 102009051266
(43) Veröffentlichungstag der Anmeldung: 04.05.2011
(73) Patentinhaber: ABB AG, 68309 Mannheim (DE)
(72) Erfinder: Schulte-Lippern, Günter, Dipl.-Ing., 58513 Lüdenscheid (DE); Ewers, Manfred, Dipl.-Ing., 58239 Schwerte (DE); Lerke, Richard, Dipl.-Ing., 58135 Hagen (DE)

(56) Entgegenhaltungen:
- EP-A1- 0 915 537
- WO-A1-2008/023102
- DE-U1-202004 004 746
- FR-A1- 2 799 582
- US-A- 3 951 489
- US-A- 4 669 804

## Beschreibung

Die Erfindung betrifft einen UP-Installationsschalter mit Geräteeinsatz und Tragring und kann allgemein bei Unterputz-Installationsschaltern, Unterputz-Tastern und Unterputz-Dimmern Anwendung finden. Ein solcher UP-Installationsschalter ist aus der EP 0 915 537 A gemäß Oberbegriff des Anspruchs 1 bekannt.

In der Regel hat ein UP(Unterputz)-Installationsschalter keine eigene Schutzleiter-Kontaktklemme zum Durchschleifen des Schutzleiters von den Anschlussleitungen über den Schalter bis zur Lampe, so dass die Verbindung von der Anschlussleitung zur Lampe über eine lose Verbindungsklemme vorzunehmen ist. Bei der Montage eines UP-Installationsschalters in einer UP-Gerätedose kann es somit vorkommen, dass eine der aus elektrisch leitendem Metall bestehenden Befestigungsspreizen eine stromführende Leitung beschädigt, wodurch insbesondere die Gefahr besteht, dass L-Potential, d. h. 230 V Wechselspannung auf den Tragring übertragen wird.

Der Erfindung liegt die Aufgabe zugrunde, einen UP-Installationsschalter mit Tragring anzugeben, welcher verbesserte Eigenschaften bezüglich der elektrischen Sicherheit aufweist.

Diese Aufgabe wird erfindungsgemäß gelöst durch einen UP-Installationsschalter nach Anspruch 1 mit Geräteeinsatz und Tragring, wobei der Geräteeinsatz eine Schutzleiterkammer zur Bildung einer Schutzleiter-Kontaktklemme aufweist.

Die mit der Erfindung erzielbaren Vorteile liegen insbesondere darin, dass es bei Verwendung des vorgeschlagenen UP-Installationsschalters in einfacher Weise ermöglicht wird, den Tragring in den Schutzleiterkreis mit einzubeziehen. Es wird das Durchschleifen des Schutzleiters von den Anschlussleitungen über den Schalter bis zur Lampe ermöglicht, so dass die Verbindung von der Anschlussleitung zur Lampe nicht mehr über eine lose Verbindungsklemme vorzunehmen ist.

Zweckmäßige Ausgestaltungen der Erfindung sind in den Unteransprüchen gekennzeichnet.

Die Erfindung wird nachstehend an Hand der in der Zeichnung dargestellten Ausführungsbeispiele erläutert. Es zeigen:
- Fig. 1: eine perspektivische Ansicht eines UP-Installationsschalters (nicht gezeigt sind Zentralscheibe, Betätigungswippe und Abdeckrahmen),
- Fig. 2: eine perspektivische Ansicht eines Schaltersockels,
- Fig. 3: eine Schnittdarstellung durch eine Schutzleiter-Kontaktklemme,
- Fig. 4: eine rückseitige Ansicht eines UP-Installationsschalters,
- Fig. 5: eine perspektivische Ansicht eines UP-Installationsschalters in Form einer Explosionszeichnung.

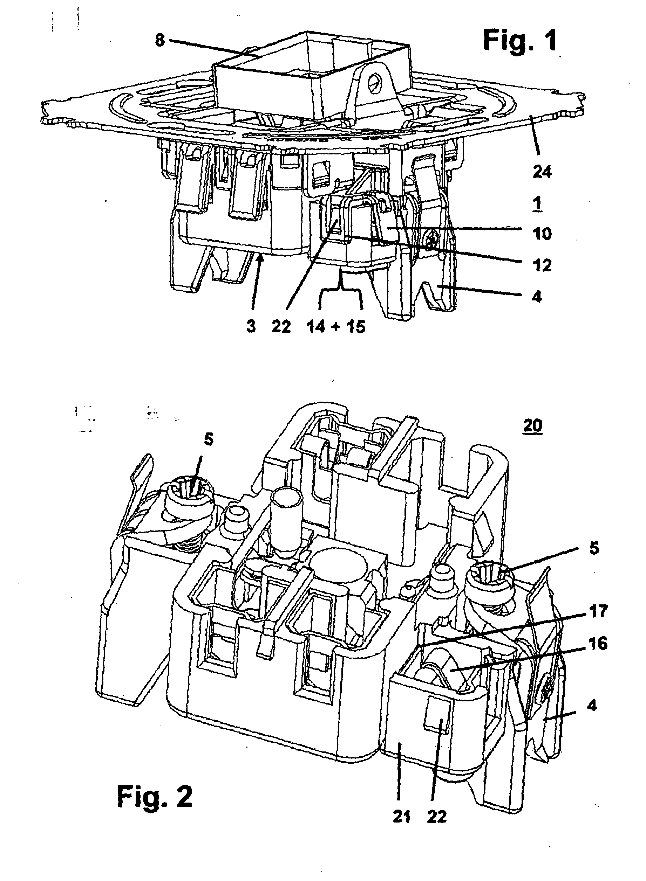

In Fig. 1 ist eine perspektivische Ansicht eines UP-Installationsschafters (ohne Zentralscheibe, Betätigungswippe und Abdeckrahmen) dargestellt. Der UP-Installationsschalter 1 weist einen Geräteeinsatz 3 mit mindestens einer Schaltwippe 8 auf. Der Geräteeinsatz 3 ist in allgemein bekannter Weise mit einem Tragring 24 (Trägerplatte) verbunden. Für die Montage des UP-Installationsschalters 1 in einer handelsüblichen UP-Gerätedose sind wie allgemein üblich zwei sich gegenüberliegende Befestigungsspreizen 4 vorgesehen, welche über Stellschrauben 5 (siehe z. B. Figur 2) betätigbar sind, d. h. angezogen oder gelöst werden können.

Der Geräteeinsatz 3 des UP-Installationsschalters 1 ist aus einem Schaltoberteil 7 und aus einem Schaltersockel 20 zusammengesetzt und weist eine Schutzleiter-Kontaktklemme 14 auf, welche in einer Schutzleiterkammer 15 angeordnet ist. Diese Schutzleiterkammer 15 setzt sich zusammen aus
- einer Abdeckkammer 9 des Schaltoberteils 7 des Geräteeinsatzes 3 und
- einer Sockelkammer 21 des Schaltersockels 20 des Geräteeinsatzes 3.
Beim Zusammenfügen von Schaltoberteil 7 und Schaltersockel 20 werden unter Anderem Abdeckkammer 9 und Sockelkammer 21 zur Schutzleiterkammer 15 zusammengesetzt. Dabei greifen Rastmittel 12 (z. B. Laschen) der Abdeckkammer 9 und Rastmittel 22 (z. b. Rastnase) der Sockelkammer 21 ineinander. Zur Betätigung der Schutzleiter-Kontaktklemme 14 (Lösen einer eingesteckten elektrischen Leitung) besitzt die Schutzleiter-Kontaktklemme 14 einen an der Schutzleiterkammer 15 angeformten Federlöser 10.

In Fig. 2 ist eine perspektivische Ansicht eines Schaltersockels dargestellt. Bei dieser Ansicht ist insbesondere die Sockelkammer 21 des Schaltersockels 20 von Interesse, in welche eine Kontaktfederkammer 17 und eine Kontaktfeder 16 eingebracht sind. Des Weiteren sind das in Form einer Rastnase ausgebildete Rastmittel 22 der Sockelkammer sowie die Befestigungsspreizen 4 inklusive Stellschrauben 5 zu erkennen.

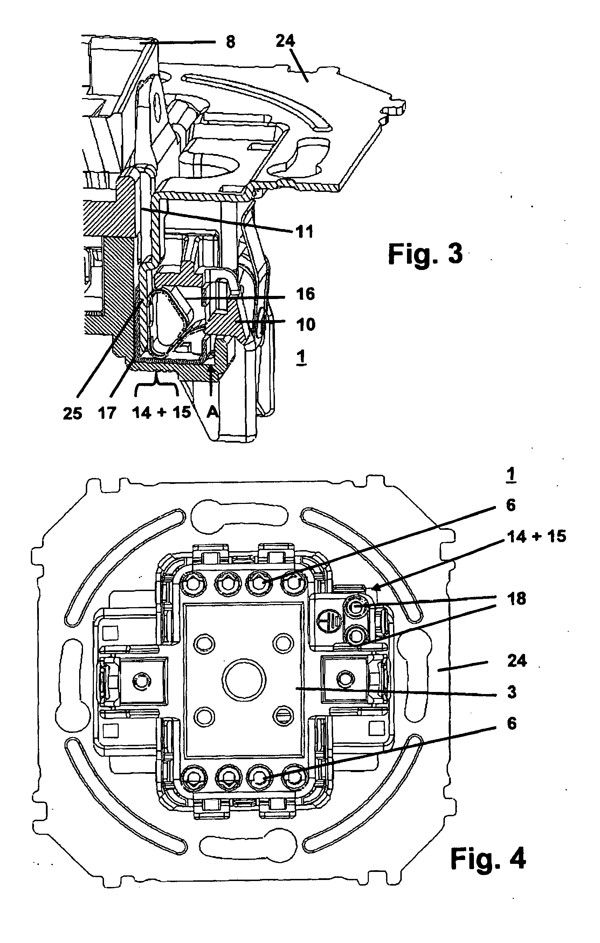

In Fig. 3 ist eine Schnittdarstellung durch eine Schutzleiter-Kontaktklemme des UP-Installationsschalters 1 dargestellt. Bei dieser Schnittdarstellung ist insbesondere die elektrische Kontaktierung zwischen der Schutzleiter-Kontaktklemme 14 und dem Tragring 24 von Interesse. Für diese elektrische Kontaktierung weist der Tragring 24 eine Tragring-Kontaktlasche 25 auf, welche durch einen Schlitz 11 im Schalteroberteile 7 (respektive allgemein im Geräteeinsatz) und eine Öffnung der Schutzleiterkammer 15 elektrisch kontaktierend zwischen Kontaktfederkammer 17 und Kontaktfeder 16 greift. Pfeil A bezeichnet die Einführrichtung zum Einführen einer elektrischen Leitung in die Schutzleiterkammer 15. Die eingeführte elektrische Leitung wird mit Hilfe der Kontaktfeder 16 sowohl elektrisch kontaktiert als auch geklemmt. Es ergibt sich eine elektrische Verbindung von der elektrischen Leitung über die Schutzleiter-Kontaktklemme 14 zum Tragring 24. Bei Druck auf den Federlöser 10 wird die Kontaktfeder 16 von der elektrischen Leitung abgehoben, wodurch ein Lösen sowie Herausziehen der elektrischen Leitung aus der Schutzleiterkammer 15 ermöglicht wird.

In Fig. 4 ist eine rückseitige Ansicht eines UP-Installationsschalters dargestellt, bei welcher insbesondere (mindestens) zwei nebeneinander angeordnete, zur Einführung von elektrischen Leitungen geeignete Leitungsseinführungen 18 der Schutzleiterkammer 15 respektive Sockelkammer 21 der Schutzleiter-Kontaktklemme 14 von Interesse sind. Des Weiteren sind die erforderlichen Schalter-Kontaktklemmen 6. des Geräteeinsatzes 3 (z. B. zur Realisierung einer AUS-Schaltung, einer Wechselschaltung, einer Serienschaltung oder einer Kreuzschaltung) und der Tragring 24 des UP-Installationsschalters 1 zu erkennen.

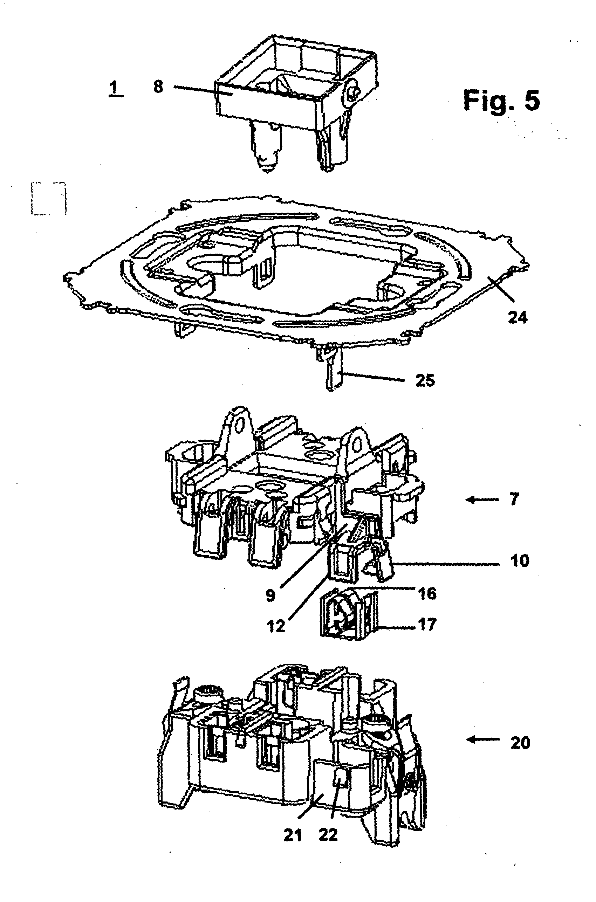

In Fig. 5 ist eine perspektivische Ansicht eines UP-Installationsschalters 1 in Form einer Explosionszeichnung dargestellt, wobei die Schaltwippe 8, der Tragring 24 mit der Tragring-Kontaktlasche 25, das Schalteroberteil 7 mit Abdeckkammer 9, Federlöser 10, laschenförmigem Rastmittel 12 und der Schaltersockel 20 mit Sockelkammer 21, Rastmittel 22 und Kontaktfeder 16 / Kontaktfederkammer 17 als in die Schutzleiterkammer 15 einzulegende elektrische Kontaktierungsmittel zu erkennen sind. Beim Montieren des Tragrings 24 auf den Geräteeinsatz 3 greift die Tragring-Kontaktlasche 25 automatisch durch den vorstehend erwähnten Schlitz 11 in die elektrischen Kontaktierungsmittel Schutzleiter-Kontaktklemme 14 / Schutzleiterkammer 15 der Schutzleiterkammer 15 ein.

### Bezugszeichenliste

- 1: UP-Installationsschalter
- 2: -
- 3: Geräteeinsatz
- 4: Befestigungsspreize
- 5: Stellschraube
- 6: Schalter-Kontaktklemmen
- 7: Schalteroberteil
- 8: Schaltwippe
- 9: Adeckkammer für Schutzleiter-Kontaktklemme
- 10: Federlöser für Schutzleiter-Kontaktklemme
- 11: Schlitz zum Einschieben der Kontaktlasche
- 12: Rastmittel
- 13: -
- 14: Schutzleiter-Kontaktklemme (Steckklemme)
- 15: Schutzleiterkammer, gebildet aus Abdeckkammer 9 und Sockelkammer 21
- 16: Kontaktfeder
- 17: Kontaktfederkammer
- 18: Leitungseinführungen der Schutzleiter-Kontaktklemme
- 19: -
- 20: Schaltersockel
- 21: Sockelkammer für Schutzleiter-Kontaktklemme
- 22: Rastmittel
- 23: -
- 24: Tragring (Trägerplatte)
- 25: Tragring-Kontaktlasche

## Patentansprüche

1. UP-Installationsschalter (1) mit Geräteeinsatz (3) und Tragring (24), **dadurch gekennzeichnet, dass** der Geräteeinsatz (3) eine Schutzleiterkammer (15) zur Bildung einer Schutzleiter-Kontaktklemme (94) aufweist, wodurch ein Durchschleifen eines Schutzleiters von den Anschlussleftungen über den Schalter bis zu einer Lampe ermöglicht ist, zur Kontaktierung von mindestens zwei elektrischen Leitungen eine Kontaktfeder (16) und eine Kontaktfederkammer (17) in der Schutzleiterkammer (15) angeordnet sind, die Schutzleiterkammer (15) mindestens zwei Leitungseinführungen (18) aufweist, die Schutzleiter-Kontaktklemme (14) einen Federlöser (10) aufweist und der Tragring (24) eine Tragring-Kontaktlasche (25) aufweist, welche elektrisch kontaktierend in die Schutzleiterkammer (15) eingreift.

2. UP-Installationsschalter (1) nach Anspruch 1, **dadurch gekennzeichnet, dass** die Tragring-Kontaktlasche (25) durch einen Schlitz (11) des Geräteinsatzes (3) in die Schutzleiterkammer (15) eingreift.

3. UP-Installationsschalter (1) nach einem der vorstehenden Ansprüche, **dadurch gekennzeichnet, dass** der Geräteeinsatz (3) aus einem Schafteroberteil (7) mit einer Abdeckkammer (9) und einem Schaltersockel (20) mit einer Sockelkammer (21) zusammengesetzt ist, wobei Abdeckkammer (9) und Sockelkammer (21) zusammen die Schutzleiterkammer (15) bilden.

4. UP-Installationsschalter (1) nach Anspruch 3, **dadurch gekennzeichnet, dass** Abdeckkammer (9) und Sockelkammer (21) über Rastmittel (12, 22) miteinander verbunden sind.

## Claims

1. Flush-mounted installation switch (1) with a device insert (3) and a supporting ring (24), **characterized in that** the device insert (3) has a protective earth conductor chamber (15) for forming a protective earth conductor contact terminal (14), by means of which it is possible to loop through a protective earth conductor of the connecting lines via the switch up to a lamp, in order to make contact with at least two electrical lines, a contact spring (16) and a contact spring chamber (17) are arranged in the protective earth conductor chamber (15), the protective earth conductor chamber (15) has at least two line entry points (18), the protective earth conductor contact terminal (14) has a spring release (10), and the supporting ring (24) has a supporting ring contact lug (25), which engages in electrical contact-making fashion in the protective earth conductor chamber (14).

2. Flush-mounted installation switch (1) according to Claim 1, **characterized in that** the supporting ring contact lug (25) engages in the protective earth conductor chamber (15) through a slot (11) in the device insert (3).

3. Flush-mounted installation switch (1) according to either of the preceding claims, **characterized in that** the device insert (3) comprises a switch upper part (7) with a covering chamber (9) and a switch base (20) with a base chamber (21), the covering chamber (9) and the base chamber (21) together forming the protective earth conductor chamber (15).

4. Flush-mounted installation switch (1) according to Claim 3, **characterized in that** the covering chamber (9) and the base chamber (21) are connected to one another via latching means (12, 22).

## Revendications

1. Commutateur d'installation encastré (1) comprenant un insert d'appareil (3) et un anneau de support (24), **caractérisé en ce que** l'insert d'appareil (3) présente une chambre pour conducteur de protection (15) destinée à former une borne de contact pour conducteur de protection (14), de sorte qu'un conducteur de protection puisse être mis en circuit depuis les lignes de connexion par le biais du commutateur jusqu'à une lampe, un ressort de contact (16) et une chambre de ressort de contact (17) étant disposés dans la chambre pour conducteur de protection (15) afin d'établir le contact avec au moins deux lignes électriques, la chambre pour conducteur de protection (15) présentant au moins deux entrées de lignes (18), la borne de contact pour conducteur de protection (14) présentant un dispositif de libération à ressort (10) et l'anneau de support (24) présentant une patte de contact pour anneau de support (25) qui vient en prise par contact électrique dans la chambre pour conducteur de protection (15).

2. Commutateur d'installation encastré (1) selon la revendication 1, **caractérisé en ce que** la patte de contact pour anneau de support (25) vient en prise à travers une fente (11) de l'insert d'appareil (3) dans la chambre pour conducteur de protection (15) .

3. Commutateur d'installation encastré (1) selon l'une quelconque des revendications précédentes, **caractérisé en ce que** l'insert d'appareil (3) est constitué d'une partie supérieure de commutateur (7) avec une chambre de recouvrement (9) et d'un socle de commutateur (20) avec une chambre de socle (21), la chambre de recouvrement (9) et la chambre de socle (21) constituant ensemble la chambre pour conducteur de protection (15).

4. Commutateur d'installation encastré (1) selon la revendication 3, **caractérisé en ce que** la chambre de recouvrement (9) et la chambre de socle (21) sont connectées l'une à l'autre par le biais de moyens d'encliquetage (12, 22).
